# EUROPÄISCHE PATENTSCHRIFT

(11) **EP 2 256 522 B1**
(45) Veröffentlichungstag und Bekanntmachung des Hinweises auf die Patenterteilung: **20.11.2013**
(21) Anmeldenummer: 10004436.1
(22) Anmeldetag: 27.04.2010
(51) Int. Cl.: G01V 8/14

(54) **Reflexionslichtschrankensensor**
Reflection light barrier sensor
Capteur de barrière lumineuse à réflexion

(30) Priorität: 28.05.2009 DE 202009007612 U
(43) Veröffentlichungstag der Anmeldung: 01.12.2010
(73) Patentinhaber: Sick AG, 79183 Waldkirch (DE)
(72) Erfinder: Wiethege, Friedhelm, 79350 Sexau (DE); Meier, Rolf, 77955 Ettenheim (DE); Wagner, Philipp, 61352 Bad Homburg (DE)
(74) Vertreter: Manitz, Finsterwald & Partner GbR

(56) Entgegenhaltungen:
- DE-A1- 19 801 632
- DE-A1-102005 013 317
- DE-A1-102005 016 375
- DE-A1-102006 027 652
- DE-A1-102006 053 229
- DE-T2- 3 875 113
- US-A- 4 201 910

## Beschreibung

Die Erfindung betrifft einen Reflexionslichtschrankensensor zur Erkennung von Objekten innerhalb eines Überwachungsbereichs, mit einer Sendereinheit zur Aussendung von Sendelicht in Richtung eines den Überwachungsbereich begrenzenden Reflektors, einer Empfängereinheit zum Empfang von von dem Reflektor reflektiertem Empfangslicht und einem Strahlteiler in dem Sendelichtpfad und dem Empfangslichtpfad, wobei die Sendereinheit, die Empfängereinheit und der Strahlteiler derart angeordnet sind, dass der Sendelichtpfad und der Empfangslichtpfad zumindest im Überwachungsbereich übereinstimmen, und wobei der Sendelichtpfad ein Sendeabbildungselement, einen Sendepolarisator und den Strahlteiler umfasst und der Empfangslichtpfad den Strahlteiler, einen Empfangspolarisator und ein Empfangsabbildungselement umfasst.

Eine derartige Reflexionslichtschrankenanordnung, welche auch als Autokollimationslichtschranke bezeichnet wird, ist beispielsweise aus DE 42 21 726 C1 oder DE 198 01 632 C2 bekannt. Sie weist gegenüber einer so genannten Doppelaugenlichtschranke gemäß DE 10 2005 013 317 B4, bei der die Senderapertur und der Empfängerapertur voneinander beabstandet sind und der Sendelichtpfad und der Empfangslichtpfad nicht übereinstimmen, den Vorteil auf, dass auch solche Objekte zuverlässig erkannt werden können, die sich im Nahbereich des Reflexionslichtschrankensensors befinden.

Eine Reflexionslichtschrankenanordnung gemäß dem Oberbegriff des Anspruchs 1 ist aus DE 10 2006 027 652 A1 bekannt. Weitere Lichtschrankenanordnungen sind in DE 38 75 113 T2, DE 10 2006 053 229 A1, DE 10 2005 016 375 A1 und US 4 201 910 A beschrieben.

Bei Reflexionslichtschranken stellt grundsätzlich die sichere Detektion von Objekten mit spiegelnden Oberflächen ein wichtiges Kriterium für die Betriebssicherheit dar. Bei einer angestrebten 100 %-igen Fehlerfreiheit darf es zu keinem Ausfall aufgrund nicht registrierter Objekte oder fehlerhafter Erkennung kommen.

Zur Lösung dieses Problems werden gekreuzte Polarisationsfilter in den Strahlengang der Reflexionslichtschranke eingebracht. Die Sendelichtstrahlen werden mittels eines Sendepolarisators in eine definierte Polarisationsrichtung polarisiert. Ein empfangsseitiger, zum Sendepolarisator orthogonal ausgerichteter Empfangspolarisator wirkt als Analysator und lässt nur Strahlen in seiner Polarisationsrichtung den Weg zur Empfängereinheit passieren.

In Kombination mit einem geeigneten Reflektor, welcher die Polarisationsebene bei der Reflexion um 90° dreht, beispielsweise einem Retroreflektor mit Tripelprismen, ist es möglich, das von einem spiegelnden Objekt reflektierte Empfangslicht von einem von dem Reflektor reflektierten Empfangslicht zu unterscheiden. Die Polarisationsebene eines einfallenden linearen Polarisationszustandes ist also nach der Reflexion an dem Reflektor idealerweise um 90° gedreht und stimmt mit der Durchlassrichtung des Empfangspolarisators überein. Bei der Reflexion an einem spiegelnden Objekt erfolgt jedoch keine Drehung der Polarisationsebene, so dass diese nun senkrecht zur Durchlassrichtung des Empfangspolarisators steht und das Empfangslicht daher den Empfangspolarisator gar nicht oder nur mit wesentlich verminderter Intensität passieren kann.

Herkömmliche, nach dem Autokollimationsprinzip arbeitende Reflexionslichtschranken, wie sie aus DE 42 21 726 C1 bekannt sind, weisen eine Optik auf, die im gemeinsamen Sendelicht- und Empfangslichtpfad angeordnet ist und daher gleichzeitig als Sendeoptik und als Empfangsoptik dient. Bei dieser Anordnung werden die Polarisatoren zwischen der Sendereinheit bzw. Empfängereinheit und dem Strahlteiler angeordnet, oder es werden polarisierende Strahlteiler verwendet, wobei in beiden Fällen die Send-/ Empfangsoptik vom bereits polarisierten Sendelicht passiert wird und das Empfangslicht schon vor der analysierenden Polarisation durch die Sende-/ Empfangsoptik hindurchtritt. Um eine maximale Detektionssicherheit für spiegelnde Objekte zu gewährleisten, muss der Polarisationszustand von Sendelicht und Erripfangslicht unter dem gesamten Strahlengang jedoch weitgehend vollständig erhalten bleiben. Daher sollten die im Strahlengang des polarisierten Lichts liegenden optischen Komponenten einen möglichst geringen depolarisierenden Einfluss haben. Aus diesem Grund werden für die kombinierte Sende-/ Empfangsoptik üblicherweise besonders spannungsarme Glaslinsen eingesetzt, deren Herstellungskosten vergleichsweise hoch sind.

Es ist daher die Aufgabe der vorliegenden Erfindung, einen Reflexionslichtschrankensensor zu schaffen, der eine hohe Detektionssicherheit für spiegelnde Objekte aufweist und kostengünstiger herzustellen ist.

Die Lösung der Aufgabe erfolgt durch die Merkmale des Anspruchs 1. Anspruch 1 betrifft einen Reflexionslichtschrankensensor zur Erkennung von Objekten innerhalb eines Überwachungsbereichs mit einer Sendeeinheit zur Aussendung von Sendelicht in Richtung eines den Überwachungsbereich begrenzenden Reflektors, einer Empfängereinheit zum Empfang von von dem Reflektor reflektiertem Empfangslicht und einem Strahlteiler in dem Sendelichtpfad und dem Empfangslichtpfad, wobei die Sendeeinheit, die Empfängereinheit und der Strahlteiler derart angeordnet sind, dass der Sendelichtpfad und der Empfangslichtpfad zumindest im Überwachungsbereich übereinstimmen, und wobei der Sendelichtpfad ein Sendeabbildungselement, einen Sendepolarisator und den Strahlteiler umfasst und der Empfangslichtpfad den Strahlteiler, einen Empfangspolarisator und ein Empfangsabbildungselement umfasst. Es ist vorgesehen, dass der Sendepolarisator zwischen dem Sendeabbildungselement und dem dem Sendeabbildungselement in Ausbreitungsrichtung des Sendelichts nachgeordneten Strahlteiler und/oder der Empfangspolarisator zwischen dem Strahlteiler und dem dem Strahlteiler in Ausbreitungsrichtung des Empfangslichts nachgeordneten Empfangsabbildungselement angeordnet ist.

Aufgrund der Anordnung des dem Sendelichtpfad zugeordneten Sendepolarisators zwischen dem Sendeabbildungselement und dem Strahlteiler bzw. des dem Empfangslichtpfad zugeordneten Empfangspolarisators zwischen Strahlteiler und Empfangsabbildungselement erfolgt keine Beeinflussung des Polarisationszustands des Sende- bzw. des Empfangslichts durch gegebenenfalls unter anderem die Polarisationsrichtung ändernde Eigenschaften der zugeordneten Sende- und Empfangsabbildungselemente, wie zum Beispiel Spannungsdoppelbrechung, in einem für die Erkennung von spiegelnden Objekten maßgeblichen Bereich. Mit Spannungsdoppelbrechung wird dabei eine Doppelbrechung bezeichnet, die auf mechanische Materialspannungen zurückzuführen ist. Somit können auch preiswerte, spritztechnisch aus Kunststoff hergestellte Optiken als Abbildungselemente anstelle der herkömmlich verwendeten spannungsarmen Glaslinsen verwendet werden, die sonst einen erheblichen Anteil an den Teilekosten der optischen Komponenten besitzen.

Derartige polarisationsrichtungsändernde Eigenschaften von beispielsweise in Kunststoffspritztechnik hergestellten Optiken haben bei dem erfindungsgemäßen Reflexionslichtschrankensensor auf die Polarisationsrichtung von Sende- und Empfangslicht keinen Einfluss, da die Polarisation des Sendelichts erst nach dem Passieren des Sendeabbildungselements erfolgt und die Polarisationsfilterung des Empfangslichts noch vor dem Empfangsabbildungselement erfolgt, so dass eine etwaige Änderung der Polarisationsrichtung durch das Sende- oder Empfangsabbildungselement ohne Einfluss auf die von der Empfängereinheit empfangene Empfangslichtintensität hat.

Bei herkömmlichen Reflexionslichtschranken nach dem Autokollimationsprinzip wird der Strahlteiler im divergenten Strahlengang zwischen der Sendereinheit und der kombinierten Sende-/Empfangsoptik platziert. Abhängig von der numerischen Apertur des Systems fällt unpolarisiertes oder polarisiertes Licht in Abhängigkeit vom Abstand von der optischen Achse unter unterschiedlichen Winkeln, möglicherweise innerhalb eines großen Winkelbereichs, auf den Strahlteiler, welcher üblicherweise aus einem auf einem Substrat aufgebrachten dichroitischen Schichtsystem besteht. Der Aufbau dieses Schichtsystems bestimmt das Teilungsverhältnis zwischen transmittiertem und reflektiertem Licht und definiert einen Einfallswinkel, bei dem dieses Teilungsverhältnis für eine bestimmte Wellenlänge und einen bestimmten Polarisationszustand erreicht wird. Bei divergentem Lichteinfall kann also das Teilungsverhältnis über die Fläche des Strahlteilers variieren und bei polarisiertem Licht auch der Polarisationszustand von Sende- und Empfangslicht stark beeinflusst werden, wodurch die Detektionssicherheit für spiegelnde Objekte eingeschränkt wird. Dies kann bei der erfindungsgemäßen Reflexionslichtschranke vermieden werden, da die Anordnung derart gewählt werden kann, dass Sendelicht und Empfangslicht als weitgehend paralleles Strahlenbündel auf den Strahlteiler treffen.

Erfindungsgemäß stehen die optischen Achsen von Sendereinheit und Empfängereinheit parallel zueinander und zwischen der Empfängereinheit und dem Strahlteiler ist ein Umlenkspiegel derart angeordnet, dass die optische Achse der Empfängereinheit um einen Winkel von 90° auf den Strahlteiler umgelenkt wird, wobei der Strahlteiler im Winkel von 45° gegenüber der optischen Achse der Sendeeinheit und der umgelenkten optischen Achse der Empfängereinheit im Schnittpunkt dieser beiden optischen Achsen angeordnet ist. Dadurch ist es möglich, gemäß einer weiteren bevorzugten Ausführungsform die Sendeeinheit und die Empfängereinheit auf einer gemeinsamen Leiterplatte anzuordnen und/oder das Sende- und Empfangsabildungselement in einem einzigen Bauteil zu kombinieren. Hierdurch können die Herstellungskosten weiter gesenkt werden.

Erfindungsgemäß ist der Umlenkspiegel konkav gekrümmt. Hierdurch kann der Umlenkspiegel zusätzlich eine strahlformende Funktion übernehmen.

Vorzugsweise kann das Empfangsabbildungselement den konkaven Umlenkspiegel umfassen. Dadurch werden das Empfangsabbildungselement und der Umlenkspiegel als ein einziges Bauteil realisiert, wodurch sich die Zahl der verwendeten Bauteile reduziert.

Gemäß einer weiteren bevorzugten Ausführungsform stehen die optischen Achsen von Sendereinheit und Empfängereinheit parallel zueinander und zwischen der Sendereinheit und dem Strahlteiler ist ein Umlenkspiegel derart angeordnet, dass die optische Achse der Sendereinheit um einen

Winkel von 90° auf den Strahlteiler umgelenkt wird, wobei der Strahlteiler im Winkel von 45° gegenüber der optischen Achse der Empfängereinheit und der umgelenkten optischen Achse der Sendereinheit im Schnittpunkt dieser beiden optischen Achsen angeordnet ist. Auch in dem Fall können Sendeeinheit und die Empfängereinheit auf einer gemeinsamen Leiterplatte angeordnet werden.

Weiterhin kann auch in dieser Anordnung der Umlenkspiegel konkav gekrümmt sein. Insbesondere kann dann das Sendeabbildungselement den konkaven Umlenkspiegel umfassen, wodurch ebenfalls eine Reduzierung der Zahl der verwendeten Bauteile erreicht wird.

Weitere vorteilhafte Ausführungsformen der Erfindung ergeben sich aus den abhängigen Ansprüchen und der nachfolgenden Figurenbeschreibung.

Ein Ausführungsbeispiel der Erfindung wird nachfolgend anhand der Zeichnung erläutert. Es zeigt:
- Fig. 1: eine Seitenansicht eines bekannten Reflexionslichtschrankensensors in schematischer Darstellung,
- Fig. 2: eine Seitenansicht eines weiteren bekannten Reflexionslichtschrankensensors in schematischer Darstellung, und
- Fig. 3: eine Seitenansicht eines erfindungsgemäßen Reflexionslichtschrankensensors gemäß einem Ausführungsbeispiel in schematischer Darstellung.

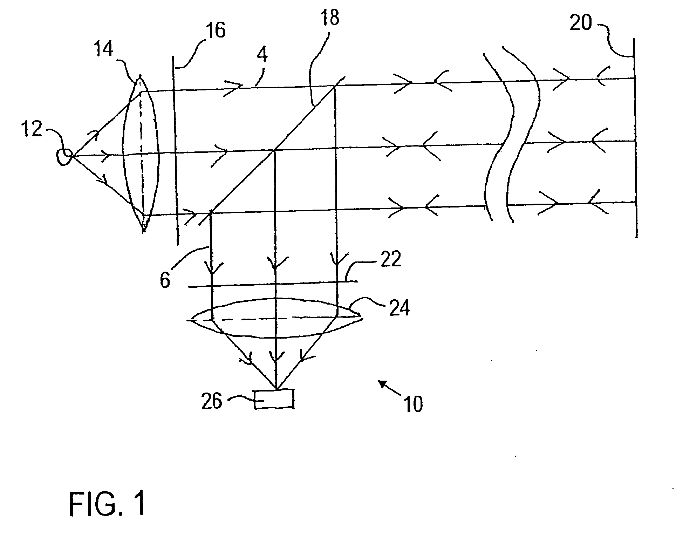

Fig. 1 bis 3 zeigen drei verschiedene Ausführungsformen von Reflexionslichtschrankensensoren 10, 100, 200, die jedoch im Bereich des Sendelichtpfades weitgehend gleich aufgebaut sind.

Die Reflexionslichtschrankensensoren 10, 100, 200 umfassen eine Sendereinheit 12, 112, 212, beispielsweise eine Laserdiode, eine Leuchtdiode oder eine Infrarotdiode, zur Aussendung von divergenten Sendelichtstrahlen 4, 104, 204. Eine Sendeoptik 14, 114, 214 formt die Sendelichtstrahlen 4, 104, 204 zu einem parallelen Bündel.

Das parallele Strahlenbündel wird anschließend durch einen Sendepolarisator 16, 116, 216 linear polarisiert und tritt nachfolgend durch einen im Winkel von 45° zur optischen Achse geneigten Strahlteiler 18, 118, 218 hindurch, welcher beispielsweise als teildurchlässiger Spiegel mit einem auf einem geeigneten Substrat aufgebrachten dichroitischen Schichtsystem ausgeführt ist.

Die parallelen Sendelichtstrahlen 4, 104, 204 werden von einem Retroreflektor 20, 120, 220 mit polarisationsrichtungsdrehenden Eigenschaften in sich selbst reflektiert, wobei die reflektierten Lichtstrahlen als Empfangslichtstrahlen 6, 106, 206 bezeichnet werden. Beispiele für Retroreflektoren mit polarisationsrichtungsdrehenden Eigenschaften sind Tripelprismen oder Anordnungen von mehreren aneinander gereihten Tripelprismen. Die Polarisationsrichtung der Empfangslichtstrahlen 6, 106, 206 unterscheidet sich hier von der Polarisationsrichtung der Sendelichtstrahlen 4, 104, 204 um 90°.

Der Bereich zwischen dem Strahlteiler 18, 118, 218 und dem Retroreflektor 20, 120, 220 stellt den Überwachungsbereich der Reflexionslichtschranke dar.

Die Empfangslichtstrahlen 6, 106, 206 treffen auf den Strahlteiler 18, 118, 218 und werden um einen Winkel von 90° reflektiert.

Bei dem ersten Ausführungsbeispiel gemäß Fig. 1 treffen die Empfangslichtstrahlen 6 auf einen Empfangspolarisator 22, dessen Polarisationsrichtung gegenüber dem Sendepolarisator 16 um 90° gedreht ist. Aufgrund der Änderung der Polarisationsrichtung durch den Retroreflektor 20 können die Empfangslichtstrahlen 6 den Empfangspolarisator 22 passieren und werden durch eine als Sammellinse ausgebildete Empfangsoptik 24 auf eine Empfängereinheit 26 fokussiert.

Bei einer Unterbrechung des Strahlengangs durch ein sich im Überwachungsbereich befindendes Objekt kann mittels einer hier nicht dargestellten Auswerteeinheit ein Signalabfall an der Empfängereinheit 26 detektiert werden.

Falls ein Objekt mit einer spiegelnden Oberfläche in den Überwachungsbereich gelangt, besteht die Möglichkeit, dass dieses Objekt die Sendelichtstrahlen 4 anstelle des Retroreflektors 20 auf den Strahlteiler 18 reflektiert. Da jedoch durch diese Reflexion an der spiegelnden Oberfläche des Objekts keine Änderung der Polarisationsrichtung erfolgt, ist die Polarisationsrichtung der Empfangsstrahlen 6 um 90° gegenüber der Durchlassrichtung des Empfangspolarisators 22 gedreht, so dass die Empfangslichtstrahlen 6 nicht durchgelassen werden und es zu einem Signalabfall an der Empfängereinheit 26 kommt.

Die hier beschriebene Anordnung der Sende- und Empfangspolarisatoren 16, 22 generiert also einen Signalabfall auch für spiegelnde Objekte und verhindert eine unter Umständen sicherheitskritische Nichterkennung dieses Objekts.

Der Reflexionslichtschrankensensor 110 gemäß dem zweiten Ausführungsbeispiel unterscheidet sich von dem Reflexionslichtschrankensensor 10 gemäß Fig. 1 darin, dass die Sendeeinheit 112 und eine Empfängereinheit 126 auf einer gemeinsamen Leiterplatte 130 beabstandet voneinander angeordnet sind, wobei die optischen Achsen von Sendeeinheit 112 und Empfängereinheit 126 parallel zueinander verlaufen.

Die von dem Strahlteiler 118 reflektierten Empfangslichtstrahlen 106 treffen unter einem Winkel von 45° auf einen Umlenkspiegel 128, welcher diese durch einen Empfangspolarisator 122 auf eine als Sammellinse ausgebildete Empfangsoptik 124 leitet, welche wiederum die Empfangslichtstrahlen 106 auf die Empfängereinheit 126 fokussiert. Die Durchlassrichtung des Empfangspolarisators 122 ist wie beim ersten Ausführungsbeispiel um 90° gegenüber der Durchlassrichtung des Sendepolarisators 116 gedreht, so dass hinsichtlich der Erkennung von Objekten mit spiegelnder Oberfläche die gleiche Wirkung wie bei dem Ausführungsbeispiel gemäß Fig. 1 eintritt.

Der Empfangspolarisator 122 kann alternativ auch zwischen dem Strahlteiler 118 und dem Umlenkspiegel 128 angeordnet werden.

Weiterhin ist es bei einer solchen Ausführungsform möglich, die Sendeoptik 114 und die Empfangsoptik 124 nebeneinander liegend in einem einzigen Spritzgussteil anzuordnen, um die Zahl der zu montierenden Teile zu verringern.

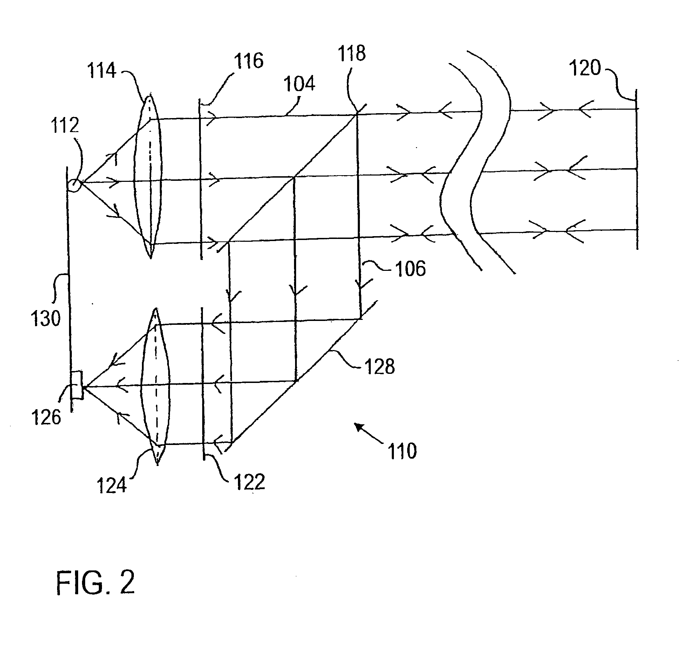

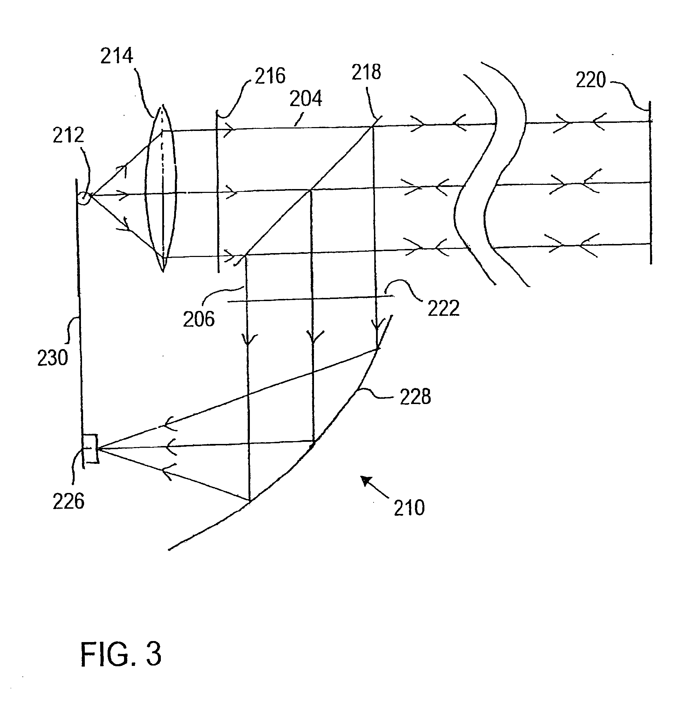

Bei dem Reflexionslichtschrankensensor 210 gemäß Fig. 3 sind die Sendeeinheit 210 und eine Empfängereinheit 226 wie bei dem Ausführungsbeispiel gemäß Fig. 2 auf einer gemeinsamen Leiterplatte 230 angeordnet.

Die Empfangslichtstrahlen 206 treffen nach der Umlenkung durch den Strahlteiler 218 auf einen Empfangspolarisator 222, dessen Durchlassrichtung gegenüber der Durchlassrichtung des Sendepolarisators um 90° gedreht ist. Nachfolgend treffen die Empfangslichtstrahlen 206 auf einen konkav gekrümmten Umlenkspiegel 228, welcher die Empfangslichtstrahlen 206 um einen Winkel von 90° in Richtung auf die Empfängereinheit 226 ablenkt und zugleich auf diese fokussiert. Die Wirkungsweise hinsichtlich der Erkennung spiegelnder Gegenstände entspricht den Ausführungsbeispielen nach Fig. 1 und 2. Durch die Kombination von Umlenkspiegel und Empfangsabbildungselement zu einem Bauelement lassen sich weitere Kosten einsparen.

In einer Abwandlung des Ausführungsbeispiels von Fig. 3 ist es auch möglich, zusätzlich zu dem konkaven Umlenkspiegel 228 eine Empfangslinse vorzusehen, welche zwischen dem Empfangspolarisator 222 und dem Umlenkspiegel 228 angeordnet werden kann.

Um die Bautiefe bei allen drei Ausführungsbeispielen zu reduzieren, kann eine Sendeoptik 14, 114, 214 mit einer verringerten Brennweite verwendet werden. Ein durch die Verkürzung der Brennweite der Sendeoptik 14, 114, 214 vergrößerter Abbildungsmaßstab kann durch die Verwendung einer Sendeeinheit 12, 112, 212 mit besonders kleiner Emissionsfläche kompensiert werden.

### Bezugszeichenliste

- 4, 104, 204: Sendelichtstrahl
- 6, 106, 206: Empfangslichtstrahl
- 10, 110, 210: Reflexionslichtschrankensensor
- 12, 112,212: Sendereinheit
- 14, 114, 214: Sendeoptik
- 16, 116, 216: Sendepolarisator
- 18, 118, 218: Strahlteiler
- 20, 120, 220: Retroreflektor
- 22, 122, 222: Empfangspolarisator
- 24, 124: Empfangsoptik
- 26, 126, 226: Empfängereinheit
- 128, 228: Umlenkspiegel
- 130, 230: Leiterplatte

## Patentansprüche

1. Reflexionslichtschrankensensor zur Erkennung von Objekten innerhalb eines Überwachungsbereichs, mit
einer Sendereinheit (12, 112, 212) zur Aussendung von Sendelicht (4, 104, 204) in Richtung eines den Überwachungsbereich begrenzenden Reflektors (20, 120, 220),
einer Empfängereinheit (26, 126, 226) zum Empfang von von dem Reflektor reflektiertem Empfangslicht (6, 106, 206) und einem Strahlteiler (18, 118, 218) in dem Sendelichtpfad und dem Empfangslichtpfad,
wobei die Sendereinheit (12, 112, 212), die Empfängereinheit (26, 126, 226) und der Strahlteiler (18, 118, 218) derart angeordnet sind, dass der Sendelichtpfad und der Empfangslichtpfad zumindest im Überwachungsbereich übereinstimmen,
wobei der Sendelichtpfad ein Sendeabbildungselement (14, 114, 214), einen Sendepolarisator (16, 116, 216) und den Strahlteiler (18, 118, 218) umfasst und der Empfangslichtpfad den Strahlteiler (18, 118, 218), einen Empfangspolarisator (22, 122, 222) und ein Empfangsabbildungselement (24, 124, 228) umfasst, und
wobei der Sendepolarisator (16, 116, 216) zwischen dem Sendeabbildungselement (14, 114, 214) und dem dem Sendeabbildungselement (14, 114, 214) in Ausbreitungsrichtung des Sendelichts nachgeordneten Strahlteiler (18, 118, 218) und/oder der Empfangspolarisator (22, 122, 222) zwischen dem Strahlteiler (18, 118, 218) und dem dem Strahlteiler (18, 118, 218) in Ausbreitungsrichtung des Empfangslichts nachgeordneten Empfangsabbildungselement (24, 124, 228) angeordnet ist,
**dadurch gekennzeichnet,**
**dass** die optischen Achsen von Sendereinheit (112, 212) und Empfängereinheit (126, 226) parallel zueinander stehen und dass zwischen der Empfängereinheit (126, 226) und dem Strahlteiler (118, 218) ein konkav gekrümmter Umlenkspiegel (128, 228) derart angeordnet ist, dass die optische Achse der Empfängereinheit (126, 226) um einen Winkel von 90° auf den Strahlteiler (118, 218) umgelenkt wird, wobei der Strahlteiler (118, 218) im Winkel von 45° gegenüber der optischen Achse der Sendereinheit (112, 212) und der umgelenkten optischen Achse der Empfängereinheit (126, 226) im Schnittpunkt dieser beiden optischen Achsen angeordnet ist.

2. Reflexionslichtschrankensensor nach Anspruch 1,
**dadurch gekennzeichnet ,**
**dass** die optischen Achsen von Sendereinheit (12) und Empfängereinheit (26) senkrecht zueinander stehen und der Strahlteiler (18) im Winkel von 45° gegenüber beiden optischen Achsen im Schnittpunkt beider optischen Achsen angeordnet ist.

3. Reflexionslichtschrankensensor nach einem der vorhergehenden Ansprüche,
**dadurch gekennzeichnet,**
**dass** die Sendereinheit (112, 212) und die Empfängereinheit (126, 226) auf einer gemeinsamen Leiterplatte (130, 230) angeordnet sind.

4. Reflexionslichtschrankensensor nach einem der vorhergehenden Ansprüche,
**dadurch gekennzeichnet,**
**dass** das Empfangsabbildungselement den konkav gekrümmten Umlenkspiegel (228) umfasst.

5. Reflexionslichtschrankensensor nach einem der vorhergehenden Ansprüche,
**dadurch gekennzeichnet,**
**dass** das Empfangsabbildungselement (24, 124) und/oder das Sendeabbildungselement (14, 114, 214) eine Sammellinse, insbesondere aus Kunststoff, umfasst.

6. Reflexionslichtschrankensensor nach einem der vorhergehenden Ansprüche,
**dadurch gekennzeichnet,**
**dass** der Reflexionslichtschrankensensor (10, 100, 200) einen Reflektor (20, 120, 220) umfasst, welcher ausgebildet ist, die Polarisationsebene des reflektierten Lichts um 90° zu drehen.

7. Reflexionslichtschrankensensor nach Anspruch 6,
**dadurch gekennzeichnet,**
**dass** der Reflektor ein Retroreflektor (20, 120, 220) ist.

8. Reflexionslichtschrankensensor nach einem der vorhergehenden Ansprüche,
**dadurch gekennzeichnet,**
**dass** die Sendereinheit (12, 112, 212) und das Sendeabbildungselement (14, 114, 214) derart ausgestaltet und angeordnet sind, dass auf den Strahlteiler (18, 118, 218) nur parallele Sendelichtstrahlen auftreffen.

## Claims

1. A reflection light barrier sensor for recognising objects within a monitored zone, comprising
a transmitter unit (12, 112, 212) for transmitting transmitted light (4, 104, 204) in the direction of a reflector (20, 120, 220) bounding the monitored zone;
a receiver unit (26, 126, 226) for receiving received light (6, 106, 206) reflected by the reflector;
and a beam splitter (18, 118, 218) in the transmitted light path and in the received light path,
wherein the transmitter unit (12, 112, 212), the receiver unit (26, 126, 226) and the beam splitter (18, 118, 218) are arranged such that the transmitted light path and the received light path coincide at least in the monitored zone;
wherein the transmitted light path comprises a transmission imaging element (14, 114, 214), a transmission polariser (16, 116, 216) and the beam splitter (18, 118, 218) and the received light path comprises the beam splitter (18, 118, 218), a reception polariser (22, 122, 222) and a reception imaging element (24, 124, 228); and wherein the transmission polariser (16, 116, 216) is arranged between the transmission imaging element (14, 114, 214) and the beam splitter (18, 118, 218) arranged downstream of the transmission imaging element (14, 114, 214) in the propagation direction of the transmitted light and/or the reception polariser (22, 122, 222) is arranged between the beam splitter (18, 118, 218) and the reception imaging element (24, 124, 228) arranged downstream of the beam splitter (18, 118, 218) in the propagation direction,
**characterised in that**
the optical axes of the transmitter unit (112, 212) and of the receiver unit (126, 226) are in parallel with one another; and **in that** a concavely curved deflection mirror (128, 228) is arranged between the receiver unit (126, 226) and the beam splitter (118, 218) such that the optical axis of the receiver unit (126, 226) is deflected by an angle of 90° onto the beam splitter (118, 218), with the beam splitter (118, 218) being arranged at an angle of 45° with respect to the optical axis of the transmitter unit (112, 212) and the deflected optical axis of the receiver unit (126, 226) being arranged at the point of intersection of these two optical axes.

2. A reflection light barrier sensor in accordance with claim 1,
**characterised in that**
the optical axes of the transmitter unit (12) and of the receiver unit (26) are perpendicular to one another and the beam splitter (18) is arranged at an angle of 45° with respect to both optical axes at the point of intersection of both optical axes.

3. A reflection light barrier sensor in accordance with any one of the preceding claims,
**characterised in that**
the transmitter unit (112, 212) and the receiver unit (126, 226) are arranged on a common circuit board (130, 230).

4. A reflection light barrier sensor in accordance with any one of the preceding claims,
**characterised in that**
the reception imaging element comprises the concavely curved deflection mirror (228).

5. A reflection light barrier sensor in accordance with any one of the preceding claims,
**characterised in that**
the reception imaging element (24, 124) and/or the transmission imaging element (14, 114, 214) comprises a converging lens, in particular of plastic.

6. A reflection light barrier sensor in accordance with any one of the preceding claims,
**characterised in that**
the reflection light barrier sensor (10, 100, 200) comprises a reflector (20, 120, 220) which is configured to rotate the polarisation plane of the reflected light by 90°.

7. A reflection light barrier sensor in accordance with claim 6,
**characterised in that**
the reflector is a retroreflector (20, 120, 220).

8. A reflection light barrier sensor in accordance with any one of the preceding claims,
**characterised in that**
the transmitter unit (12, 112, 212) and the transmission imaging unit (14, 114, 214) are configured and arranged such that only parallel transmitted light beams are incident on the beam splitter (18, 118, 218).

## Revendications

1. Capteur pour barrière lumineuse à réflexion destiné à la reconnaissance d'objets à l'intérieur d'une zone de surveillance, comprenant
une unité émettrice (12, 112, 212) pour émettre une lumière émise (4, 104, 204) en direction d'un réflecteur (20, 120, 220) qui limite la zone de surveillance,
une unité réceptrice (26, 126, 226) pour recevoir une lumière reçue (6, 106, 206) réfléchie par le réflecteur,
et un diviseur de rayonnement (18, 118, 218) dans le trajet de la lumière émise et le trajet de la lumière reçue,
dans lequel l'unité émettrice (12, 112, 212), l'unité réceptrice (26, 126, 226) et le diviseur de rayonnement (18, 118, 218) sont agencés de telle façon que le trajet de lumière émise et le trajet de lumière reçue coïncident au moins dans la zone de surveillance,
dans lequel le trajet de lumière émise comprend un élément d'imagerie d'émission (14, 114, 214), un polariseur d'émission (16, 116, 216) et le diviseur de rayonnement (18, 118, 218), et le trajet de lumière reçue comprend le diviseur de rayonnement (18, 118, 218), un polariseur de réception (22, 122, 222) et un élément d'imagerie de réception (24, 124, 228), et
dans lequel le polariseur d'émission (16, 116, 216) est agencé entre l'élément d'imagerie d'émission (14, 114, 214) et le diviseur de rayonnement (18, 118, 218) agencé après l'élément d'imagerie d'émission (14, 114, 214) dans la direction de propagation de la lumière émise, et/ou le polariseur de réception (22, 122, 222) est agencé entre le diviseur de rayonnement (18, 118, 218) et l'élément d'imagerie de réception (24, 124, 228) agencé après le diviseur de rayonnement (18, 118, 218) dans la direction de propagation de la lumière reçue,
**caractérisé en ce que**
les axes optiques de l'unité émettrice (112, 212) et de l'unité réceptrice (126, 226) sont parallèles l'un à l'autre, et **en ce qu'**un miroir de renvoi à courbure concave (128, 228) est agencé entre l'unité réceptrice (126, 226) et le diviseur de rayonnement (118, 218), de telle façon que l'axe optique de l'unité réceptrice (126, 226) est dévié d'un angle de 90° vers le diviseur de rayonnement (118, 218), et le diviseur de rayonnement (118, 218) est agencé à un angle de 45° par rapport à l'axe optique de l'unité d'émission (112, 212) et à l'axe optique dévié de l'unité réceptrice (126, 226) à l'intersection de ces deux axes optiques.

2. Capteur pour barrière lumineuse à réflexion selon la revendication 1,
**caractérisé en ce que** les axes optiques de l'unité émettrice (12) et de l'unité réceptrice (26) sont perpendiculaires l'un à l'autre, et le diviseur de rayonnement (18) est agencé à un angle de 45° par rapport aux deux axes optiques à l'intersection des deux axes optiques.

3. Capteur pour barrière lumineuse à réflexion selon l'une des revendications précédentes,
**caractérisé en ce que** l'unité émettrice (112, 212) et l'unité réceptrice (126, 226) sont agencées sur une carte à circuits commune (130, 230).

4. Capteur pour barrière lumineuse à réflexion selon l'une des revendications précédentes,
**caractérisé en ce que** l'élément d'imagerie de réception inclut le miroir de renvoi à courbure concave (228).

5. Capteur pour barrière lumineuse à réflexion selon l'une des revendications précédentes,
**caractérisé en ce que** l'élément d'imagerie de réception (24, 124) et/ou l'élément d'imagerie d'émission (14, 114, 214) inclut une lentille convergente, en particulier en matière plastique.

6. Capteur pour barrière lumineuse à réflexion selon l'une des revendications précédentes,
**caractérisé en ce que** le capteur pour barrière lumineuse à réflexion (10, 100, 200) inclut un réflecteur (20, 120, 220) qui est réalisé pour faire tourner le plan de polarisation de la lumière réfléchie sur 90°.

7. Capteur pour barrière lumineuse à réflexion selon la revendication 6,
**caractérisé en ce que** le réflecteur est un rétroréflecteur (20, 120, 220).

8. Capteur pour barrière lumineuse à réflexion selon l'une des revendications précédentes,
**caractérisé en ce que** l'unité émettrice (12, 112, 212) et l'élément d'imagerie d'émission (14, 114, 214) sont conçus et agencés de telle façon que seulement des rayons de lumière émise parallèles tombent sur le diviseur de rayonnement (18, 118, 218).
